# EUROPEAN PATENT APPLICATION

(11) **EP 0 650 010 A1**
(43) Date of publication of application: **26.04.1995**
(21) Application number: 94306968.2
(22) Date of filing: 23.09.1994
(51) Int. Cl.: F21S 3/02

(54) **Surface illuminating apparatus**

(30) Priority: 24.09.1993 JP 238345/93
(71) Applicant: T. CHATANI & COMPANY LTD., Osaka-shi, Osaka (JP)
(72) Inventor: Kojima, Takeshi, Osaka (JP)
(74) Representative: Shanks, Andrew

(57) **Abstract**

A surface illuminating apparatus which may be lightweight, thin-walled and reduced in manufacturing expense with improved brightness thereof relative to that of a light source, and comprising a light source (1) formed of a long lamp and having a light-emitting portion (2) on one side thereof, an optically conductive case (6) extending in a light-emitting direction from said light-emitting portion (2), opened in an upper surface thereof, and provided with a diffusing reflective layer (6a) on a bottom surface thereof and an air layer (5) leading diffusedly reflected light towards said upper surface and a light diffusing plate (7) provided on the upper surface of said optically conductive case (6).

## Description

The present invention relates to a surface illuminating apparatus, primarily for use as a back light of a liquid crystal display device.

Surface illuminating apparatus, which has been conventionally used as back light of a liquid crystal display device, comprises: an optically conductive plate formed of transparent resins, such as acrylic resin, and provided with a diffusing reflective layer consisting of dot-shaped projections on one side thereof; a reflective and light diffusing plate mounted upon said optically conductive plate; and a light source arranged on an edge portion of the optically conductive plate. A light emitted from said light source is led to the optically conductive plate from its side surface to be diffusedly reflected by said diffusing reflective layer and said liquid crystal display device being illuminated through said light diffusing plate.

However, recently liquid crystal display devices have been growing in size, but have been becoming lighter and thinner on the other hand, and thus it has been required that also said surface illuminating apparatus is reduced in weight, thickness, consumption of electric power and manufacturing expense.

However, the conventional surface illuminating apparatus comprises the optically conductive plate and the reflective plate and the light diffusing plate mounted upon the optically conductive plate, so that there is a limit to the weight and thickness reduction of the optically conductive plate due to its necessary thickness.

In addition, also one, in which the optically conductive plate is devised in shape, as disclosed in Japanese Patent Application Laid-Open No. Hei 3-111819, has been required but the limitation in weight and thickness reduction cannot be avoided so far as the optically conductive plate is used.

It is an object of the present invention to provides a surface illuminating apparatus which may be lightweight, thin-walled and reduced in manufacturing expense with improved brightness thereof relative to that of a light source.

In order to achieve the above described object, a surface illuminating apparatus according to the present invention comprises: a light source formed of a long lamp and having a light-emitting portion on one side thereof; an optically conductive case extending in a light-emitting direction from said light-emitting portion, opened in an upper surface thereof, and provided with a diffusing reflective layer on a bottom surface thereof and an air layer for leading diffusedly reflected light towards said upper surface; and a light diffusing plate provided on the upper surface of said optically conductive case.

In addition, in the above described invention, it is preferable that a reflective plate, inclined toward said diffusing reflective layer to reflect and induce light emitted from the light-emitting portion towards the diffusing reflective layer, is provided above said light source, and said bottom surface of the optically conductive case is upwardly inclined with an increase of distance from the light source.

Furthermore, it is preferable that said light diffusing plate is extended above a position where the light source is arranged, the light source being provided with a semi-transparent plate in a portion opposite to the light diffusing plate thereabove, and a large number of dot-shaped projections functioning as condensing diffusing lenses being regularly arranged on a surface of the light diffusing plate.

Said surface illuminating apparatus according to the present invention comprises the light source formed of a long lamp and having the light-emitting portion on one side thereof, the optically conductive case extending in the light-emitting direction of the light-emitting portion, opened in an upper surface thereof, and provided with the diffusing reflective layer on a bottom surface thereof and said air layer leading said diffusedly reflected light toward the upper surface, and the light diffusive plate provided on the upper surface of the optically conductive case, so that the optically conductive plate, which has previously been indispensable, can be omitted and thus the limitation in weight and thickness reduction due to the form of the optically conductive plate can be avoided not only to reduce the weight to a half or less as compared with conventional examples but also to remarkably reduce the thickness as compared with conventional examples, whereby being remarkably thinned (for example to about 3 mm), while improving the surface brightness thereof and reducing the consumption of electric power and the manufacturing expenses.

Moreover, uniformity of light emission may be maintained, without generating bright lines, by the use of the reflective plate, and the light emitted from the light-emitting portion of the light source can be uniformly incident upon the diffusing reflective layer provided on the bottom surface of the optically conductive case by inclining the bottom portion of the optically conductive case upward with an increase of distance from the light source, and thus the uniformity can be improved and the uniformity can be still more improved by incorporating the reflective plate.

In addition, the diffusing reflective layer is mainly formed of dot-shaped protrusions and it is preferable that the density of said protrusions is increased with an increase of distance from the light source.

Furthermore, the brightness can be controlled to an average value without increasing it as compared with that in other portions while providing surface illumination in the portion extended above the position where the light source is arranged, by extending the light diffusing plate above the position where the light source is arranged and providing a semi-transparent plate in the portion opposite to the extended portion of the light diffusing plate above the light source.

The diffused reflecting light diffusedly reflected upon the air layer can be condensed by the condensing function of the dot-shaped projections by providing the dot-shaped projections on the surface of the light diffusing plate and the thus condensed light can be diffused by the diffusing function of the dot-shaped projections. As a result, the brightness can be improved while maintaining uniformity.

### [Brief Description of the Drawings ]

[Fig. 1] This is a sectional view showing a first preferred embodiment of a surface illuminating apparatus according to the present invention.

[Fig. 2] This is a plan view with a light diffusive plate in Fig. 1 omitted.

[Fig. 3] This is a partially enlarged sectional view showing one example of said light diffusive plate.

[Fig. 4] This is a partially enlarged plan view showing a dot-pattern of the light diffusive plate.

[Fig. 5] This is a partially enlarged sectional view showing another example of the light diffusive plate.

[Fig. 6] This is a partially enlarged plan view showing a dot-pattern of the light diffusive plate in Fig. 5.

[Fig. 7] This is a sectional view showing a second preferred embodiment of a surface illuminating apparatus according to the present invention.

### Detailed Description of the Invention

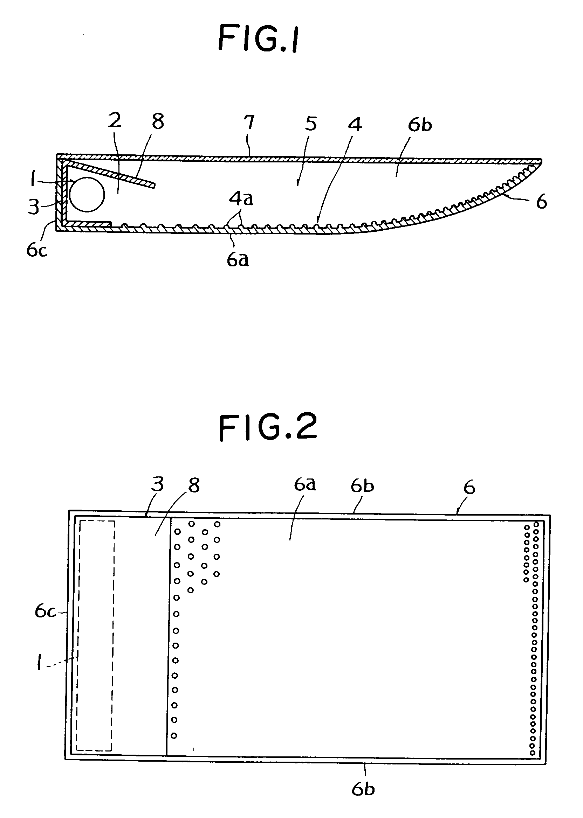

The first preferred embodiment shown in Fig. 1 relates to a single lamp-type backlight for use in a liquid crystal display using a long cold cathode tube lamp as a light source 1. Said light source 1 is provided with a lamp house 3 surrounding the light source 1, mirror-finished on an inner surface thereof and provided with a light-emitting portion 2 on one side in the radial direction thereof, said lamp house 3 being provided with an optically conductive case 6 opened in an upper surface thereof and provided with a diffused reflective layer 4 on a bottom surface 6a thereof and an air layer 5 leading diffusedly reflected lights toward said upper surface before in a light-emitting direction of a light-emitting portion 2 thereof, and said optically conductive case 6 being provided with a light diffusive plate 7 on an upper surface thereof.

The optically conductive case 6 has a size covering the lamp house 3 and includes the lamp house 3 on one side thereof. In addition, said bottom surface 6a is curvedly inclined upward with an increase of distance from the light source 1 and integrally molded from synthetic resins together with both side surfaces 6b and a back surface 6c or a frame member consisting of said both side surfaces 6b and said back surface 6c is integrally molded and the bottom surface 6a is molded separately from said frame member followed by integrally connecting the bottom surface 6a with the frame member.

In addition, although the diffused reflective layer 4 of the bottom surface 6a may be formed by screen printing whitish minute spots, it is preferable that the bottom surface 6a is made of transparent synthetic resins and dot-shaped uneven portions 4a are formed by molding on an inner surface of the bottom surface 6a, in short an inner surface on the side of the air layer 5.

In case of the screen printing, the bottom surface 6a is formed of materials having a reflecting surface. In addition, in the case where said uneven portions 4a are formed by molding, the bottom surface 6a may be molded separately from the frame member but also in the case where the optically conductive case 6 is integrally molded, the diffused reflective layer 4 can be formed at the same time as the molding of the optically conductive case 6. Thin-walled reflecting plates, such as aluminum foil and silver-vapor coated film, are stuck to an outer surface of the bottom surface 6a and inner surfaces of both side surfaces 6b in case of the integral molding so that the light may be prevented from leaking from the bottom surface 6a and totally reflected on said inner surfaces of the side surfaces 6b.

Furthermore, in the case where the uneven portions 4a are formed by molding to construct the diffused reflective layer 4, the bottom surface 6a or the optically conductive case 6 is formed mainly by injection molding. In this molding, a surface of one way-type cavity in a molding metal mold is subjected to an etching by the use of a plane mask having an appointed dot-pattern to form concave portions of said pattern followed by pouring transparent resins, such as acrylic resins, in said cavity of said metal mold to mold the plate-like bottom surface 6a or optically conductive case 6. Consequently, the diffused reflective layer 4 consisting of the uneven portions 4a having the appointed pattern is formed on the inner surface of the bottom surface 6a by this molding. Thus, the bottom surface 6a having the diffused reflective layer 4 can be easily processed and the diffused reflective layer 4 can be simultaneously formed on the bottom surface 6a, so that the optically conductive case 6 can be easily processed and thus the manufacturing expenses can be still more reduced.

Moreover, although the dot-pattern of the diffused reflective layer 4 is not specially limited, it is preferable that its density is increased with an increase of distance from the light source 1, as shown in Figs. 1, 2. In addition, the convex portions projected in a dotted shape may be made continuous in chains and these continuous lines in chains may be regularly arranged at appointed pitches and an inclined angle of 45° relatively to the emitting direction of the light emitted from the light-emitting portion 2 of the light source 1. In this case, the height of the respective convex portions is set at for example 50µm and it is preferable that the projected surface area of the respective convex portions is adapted to be increased with an increase of distance from the light source 1.

Furthermore, in the first preferred embodiment shown in Fig. 1, the lamp house 3 is included on one side of the optically conductive case 6, the light diffusive plate 7 being extended above the position where the lamp house 3 is arranged all over the upper surface of the optically conductive case 6, and the upper surface of the lamp house 3 opposite to the extended portion of the light diffusive plate 7 above the light source 1 being formed of the semitransparent plate 8. Thus, the surface illumination becomes possible also at the extended portion and the total upper surface of the optically conductive case 6 including the lamp house 3 can be utilized for the surface illumination. As a result, the optically conductive case 6 can be still more small-sized with being capable of controlling the brightness of the extended portion to the average brightness without increasing it as compared with that of other portions.

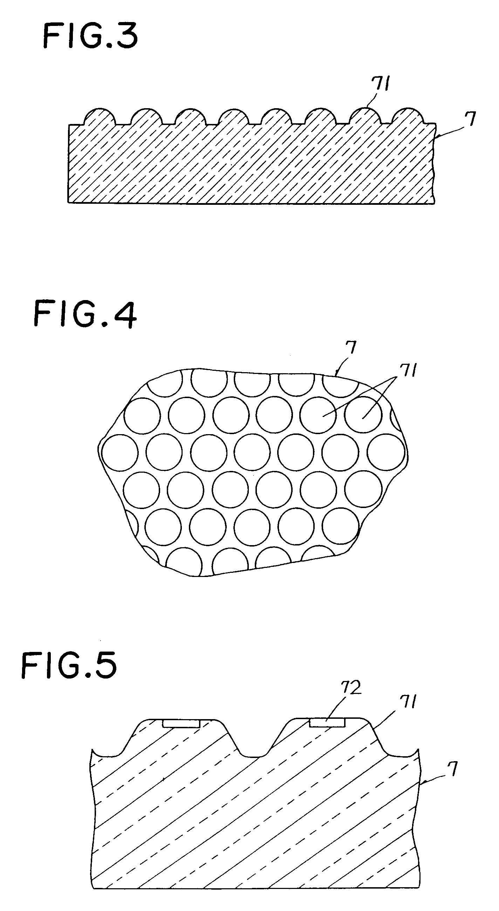

Besides, although the light diffusive plate 7 may be formed of at least one piece of diffusion film, such as known polycarbonate film, put one upon another, at least one piece of light diffusive plate 7 provided with a large number of dot-shaped projections 71 having the function of the condensing diffusing lens regularly arranged on the surface thereof may be put one upon another, as shown in Figs. 3, 4. In addition, the light diffusive plate 7 may be used together with the above described known diffusion film which is finished to a finely roughened surface.

The light diffusive plate 7 is formed of the resinous sheet made of polycarbonate resins and polyester resins and the dot-shaped projections 71 are formed by pressing using for example an enbossing roll. The dot-shaped projections 71 shown in Figs. 3, 4 are semispherical with diameters of 10 µm and arranged zigzag at pitches of 40µm. Not only the uniformity but also the surface brightness can be improved by using this light diffusive plate 7. It seems that its reason consists in that, the dot-shaped projections 71 have the function of the lens and the construction, in which a large number of small lenses stand in a row, is formed and thus the diffusedly reflected lights from the air layer 5 or the lights transmitted through the diffusion films in the case where the diffusion films are used together can be efficiently condensed by the function of the lenses while the condensed light can be efficiently diffused on the surfaces of the respective dot-shaped projections 71.

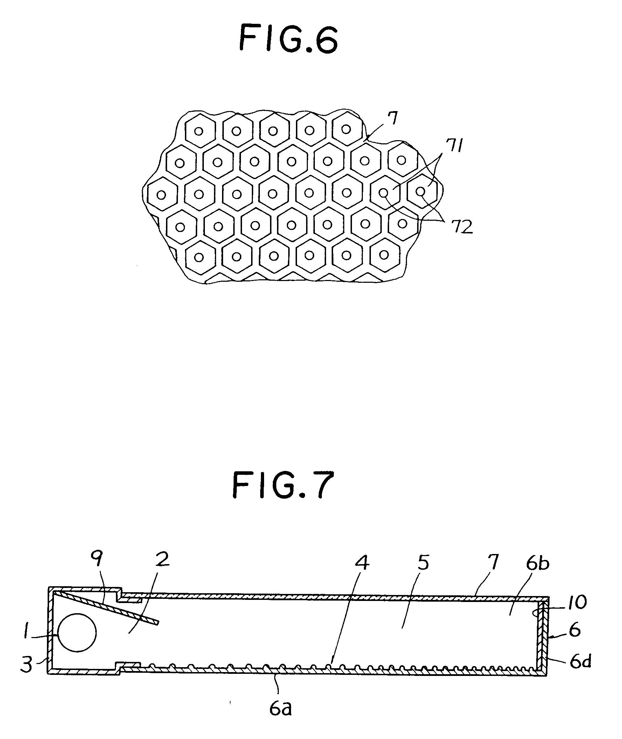

In addition, although the dot-shaped projections 71 are semispherical, they may be in the form of truncated pyramid and truncated cone or column and prism. One example of them is shown in Fig. 5 and Fig. 6.

The dot-shaped projections 71 shown in Figs. 5, 6 are in the form of truncated hexagonal pyramid, in which each side is inclined at about 35° and provided with a circular concave portion 72 having a diameter of 7.5 µm in a central portion of a top surface thereof, and regularly arranged zigzag in the same manner as in the preferred embodiment shown in Fig. 4.

In the surface illuminating apparatus having the above described construction, upon lighting the light source 1, the lights emitted from the light source 1 are diffusedly reflected by the diffused reflective layer 4 of the bottom surface 6a in the optically conductive case 6 to be turned into the diffusedly reflected lights at the air layer 5 followed by being diffused from the light diffusive plate 7. As a result, not only the brightness can be improved as compared with the conventional surface illuminating apparatus using the optically conductive plate but also the light-weighting and thin-walling become possible and additionally also the manufacturing process can be simplified in spite of using the optically conductive plate and thus also the manufacturing expenses can be reduced.

By the way, provided that one cold cathode tube lamp having the light source brightness of 34 to 36 kcd/cm² is used as the light source 1 and the same size of flat surface of the whole surface illuminating apparatus is used, the comparison of the surface illuminating apparatus according to the present invention with the conventional surface illuminating apparatus using the flat-type optically conductive plate is shown in Table 1.

**Table 1**

| | Conventional | Present Invention |
|---|---|---|
| Weight (g) | 110 - 130 | 40 or less |
| Thickness (mm) | 4.5 | 3 - 4 |
| Brightness (cd/cm²) | 1,500-2,500 | 2,500 - 3,000 |
| Tube diameter of lamp ( φ) | 3 | 2.6 |

In addition, the weight and the thickness of the surface illuminating apparatus according to the present invention were set on the basis of the tube diameter of lamp (2.6φ ) but the tube diameter of lamp can be set so as to be smaller than 2.6φ , for example 1.8 φ , so that the weight can be still more reduced and thus the thickness can be reduced in this case. On the contrary, the conventional surface illuminating apparatus uses the flat-type optically conductive plate, so that the weight and thickness shown in Table 1 cannot be reduced on account of the limitation of thickness resulting from the processing of the optically conductive plate so far as the optically conductive plate is not improved.

As obvious from Table 1, according to the present invention, not only the weight can be reduced to 50% or less but also the thickness can be reduced with improving the surface brightness to an equivalent extent or more as compared with the conventional surface illuminating apparatus. In addition, although the surface illuminating apparatus according to the present invention shown in Table 1 uses the light diffusive plate 7 and the known diffusive film, the brightness can be improved by 30 to 40% by using the light diffusive plate 7 having a large number of dot-shaped projections 71 having the function of the condensing diffusing lens.

A second preferred embodiment shown in Fig. 7 will be below described.

In said second preferred embodiment, a lamp house 3 including a cold cathode tube lamp as a light source 1 is connected with one side of an optically conductive case 6 and a reflecting and inducing plate 9 inclined toward a diffused reflective layer 4 of a bottom surface 6a in said optically conductive case 6 for reflecting by said diffused reflective layer 4 to induce lights emitted from a light-emitting portion 2 is provided above said lamp house 3.

In addition, although said bottom surface 6a in the optically conductive case 6 according to the second preferred embodiment may be curvedly inclined in the same manner as in the first preferred embodiment, the bottom surface 6a is formed horizontally and a reflecting plate 10 is stuck to a front side surface 6d of the optically conductive case 6 opposite to said light-emitting portion 2 in the same manner as to side surfaces 6b in Fig. 7.

The first preferred embodiment is more advantageous in uniformity but the weight and thickness shown in Table 1 can be obtained and also the equivalent surface brightness can be obtained, the optically conductive case 6 is rectangularly formed in this second preferred embodiment, so that the second preferred embodiment is advantageous as compared with the first preferred embodiment in processing.

Every above described preferred embodiment is long axis single lamp type but may be long axis double lamp type.

As above described, the surface illuminating apparatus according to the present invention comprises the light source 1 having the light-emitting portion 2 on one side thereof, the optically conductive case 6 positioned before in a light-emitting direction of the light-emitting portion 2, opened in an upper surface thereof, and provided with the diffused reflective layer 4 on the bottom surface thereof and the air layer 5 leading the diffusedly reflected light toward the upper surface and the light diffusive plate 7 provided on the upper surface of the optically conductive case 6, so that the optically conductive plate, which has been indispensable, can be omitted and thus the limitation in light-weighting and thin-walling due to the construction using the optically conductive plate can be broken down not only to reduce the weight to a half or less as compared with the conventional example but also to remarkably reduce the thickness as compared with the conventional example, whereby being remarkably thinned (for example about 3 mm), with improving the surface brightness thereof and reducing the consumption of electric power and the manufacturing expenses.

Moreover, the uniformity can be prevented from being deteriorated without generating the bright lines by the use of the reflecting and inducing plate 9 and the light emitted from the light-emitting portion 2 of the light source 1 can be uniformly incident upon the diffused reflective layer 4 provided on the bottom surface of the optically conductive case 6 by inclining the bottom portion of the optically conductive case 6 upward with an increase of distance from the light source 1 and thus the uniformity can be improved and the uniformity can be still more improved by incorporating the reflective and inductive plate 9.

Furthermore, the brightness can be controlled to an average value without increasing it as compared with that in other portions but with making a surface illumination in the portion extended above the position where the light source 1 is arranged of the light diffusive plate 7 possible by extending the light diffusive plate 7 above the position where the light source 1 is arranged and providing the semitransparent plate 8 in the portion opposite to the extended portion of the light diffusive plate 7 above the light source 1.

Besides, the diffused reflecting lights diffusedly reflected upon the air layer 5 can be condensed by the condensing function of the dot-shaped projections 71 by providing the dot-shaped projections 71 on the surface of the light diffusive plate 7 and the thus condensed light can be diffused by the diffusing function of the dot-shaped projections 71. As a result, also the brightness can be improved with holding the uniformity.

## Claims

1. A surface illuminating apparatus comprising: a light source (1) formed of a long lamp and having a light-emitting portion (2) on one side thereof; an optically conductive case (6) extending in a light-emitting direction from said light-emitting portion (2), opened in an upper surface thereof, and provided with a diffusing reflective layer (4) on a bottom surface thereof and an air layer (5) for leading a diffusedly reflected light towards said upper surface; and a light diffusing plate (7) provided on the upper surface of said optically conductive case (6).

2. A surface illuminating apparatus as set forth in claim 1, in which a reflecting plate (9), inclined towards said diffusing reflective layer (4) to reflect and induce a light emitted from the light-emitting portion (2) towards the diffusing reflective layer (4), is provided above said light source (1).

3. A surface illuminating apparatus as set forth in claim 1 or 2, in which said bottom surface (6a) of the optically conductive case (6) is upwardly inclined with an increase of distance from the light source (1).

4. A surface illuminating apparatus as set forth in claim 1, in which said light diffusing plate (7) extends above the light source (1) and the light source (1) is provided with a semi-transparent plate (8) in a portion opposite to the light diffusing plate (7) thereabove.

5. A surface illuminating apparatus as set forth in claim 1, in which a large number of dot-shaped projections (71), acting as condensing diffusing lenses are regularly arranged on a surface of the light diffusive plate (7).
